# EUROPEAN PATENT APPLICATION

(11) **EP 1 201 276 A2**
(43) Date of publication of application: **02.05.2002**
(21) Application number: 01402525.8
(22) Date of filing: 01.10.2001
(51) Int. Cl.: A63F 13/06

(54) **Video game control unit**

(30) Priority: 31.10.2000 US 702296
(71) Applicant: Midway Amusement Games, LLC, Chicago, Illinois 60618 (US)
(72) Inventor: Gomez, George A., Evanston, Illinois 60202 (US)
(74) Representative: Loisel, Bertrand

(57) **Abstract**

A video game control unit for use with a video game, comprises a universal force feedback transmitter and a plurality of different vehicle controls detachably mountable to the transmitter. The universal force feedback transmitter transmits forces felt by a simulated vehicle in the video game, and receives and interprets data from the video game indicative of the forces. One of the vehicle controls is mounted to the transmitter at a given time according to a type of the simulated vehicle in the video game. The one of the vehicle controls manipulates the simulated vehicle during play of the video game.

## Description

### FIELD OF THE INVENTION

The invention pertains to the field of video game control units giving realistic force feedback to vehicle control devices to simulate the actual forces that would be felt by a user of a real vehicle in similar circumstances. Specifically, the invention deals with a universal force feedback transmitter for home video games. In its preferred embodiment, the invention enables the user to play different video games with one force feedback transmitter and a plurality of detachable vehicle controls.

### BACKGROUND OF THE INVENTION

In the video game industry, some games have user control units that simulate the actual forces a vehicle user would feel in a real vehicle under similar circumstances. Such control units are typically sold as a one-piece apparatus consisting of two parts, a force feedback transmitter and vehicle controls. The vehicle controls are fixedly connected to the force feedback transmitter and are manipulated by the user to control the image of a vehicle displayed on a video screen during the game. However, video games that utilize vehicle controls often benefit from different types of controls for each different game application. For example, an automobile racing game may use a vehicle control having a steering wheel, but a motorcycle racing game may use one with handle bars. Since the existing force feedback transmitter and vehicle controls are sold as one piece, a video game user must purchase a different video game control unit for each different video game application they wish to play. Further information on such control devices can be found in U.S. Patent No. 5,044,956, which is incorporated herein by reference.

The main component of a video game control unit is the electric motor found in the force feedback transmitter. The motor is driven by a computer that receives data simulating the real world forces that would be acting on a real vehicle control in various situations, and constitutes the bulk of the cost in producing the control units. Heretofore, manufacturers have typically produced video game control units where the force feedback transmitter is fixedly integrated with a single vehicle control. Because having to purchase a new force feedback transmitter with each vehicle control for each different video game application imparts a significant and redundant cost to the video control unit user, a need has arisen for a universal force feedback transmitter to which a plurality of different vehicle controls may be connected and used to their fullest capabilities.

### SUMMARY OF THE INVENTION

A video game control unit for use with a video game, comprises a universal force feedback transmitter and a plurality of different vehicle controls detachably mountable to the transmitter. The force feedback transmitter transmits forces felt by a simulated vehicle in the video game, and receives and interprets data from the video game indicative of the forces. One of the vehicle controls is mounted to the transmitter at a given time according to a type of the simulated vehicle in the video game. The one of the vehicle controls manipulates the simulated vehicle during play of the video game.

### BRIEF DESCRIPTION OF THE DRAWINGS

The foregoing and other advantages of the invention will become apparent upon reading the following detailed description and upon reference to the drawings in which:
FIG. 1 is a perspective view of a video game system including a video game control unit embodying the present invention;
FIG. 2 is a perspective view of an interior of a force feedback transmitter of the video game control unit, including a first type of coupling of the motor and drive shafts of the transmitter;
FIG. 3 is a perspective view of a second type of coupling of the motor and drive shafts of the force feedback transmitter;
FIG. 4 is a perspective view of a third type of coupling of the motor and drive shafts of the force feedback transmitter;
FIG. 5 is a perspective view of a first type of electromechanical coupling between the force feedback transmitter and a vehicle controller of the video game control unit;
FIG. 6 is a side view of a first type of mechanical coupling between the force feedback transmitter and an aesthetic shell of the video game control unit;
FIG. 7 is a perspective view of a second type of mechanical coupling between the force feedback transmitter and the aesthetic shell;
FIG. 8 are front views of different aesthetic shells that may be mounted to the force feedback transmitter depending upon the theme of the video game being played;
FIG. 9 is a perspective of a second type of electromechanical coupling between the force feedback transmitter and the vehicle controller; and
FIG. 10 is a perspective of a third type of electromechanical coupling between the force feedback transmitter and the vehicle controller.

While the invention is susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents, and alternatives falling within the spirit and scope of the invention as defined by the appended claims.

### DESCRIPTION OF SPECIFIC EMBODIMENTS

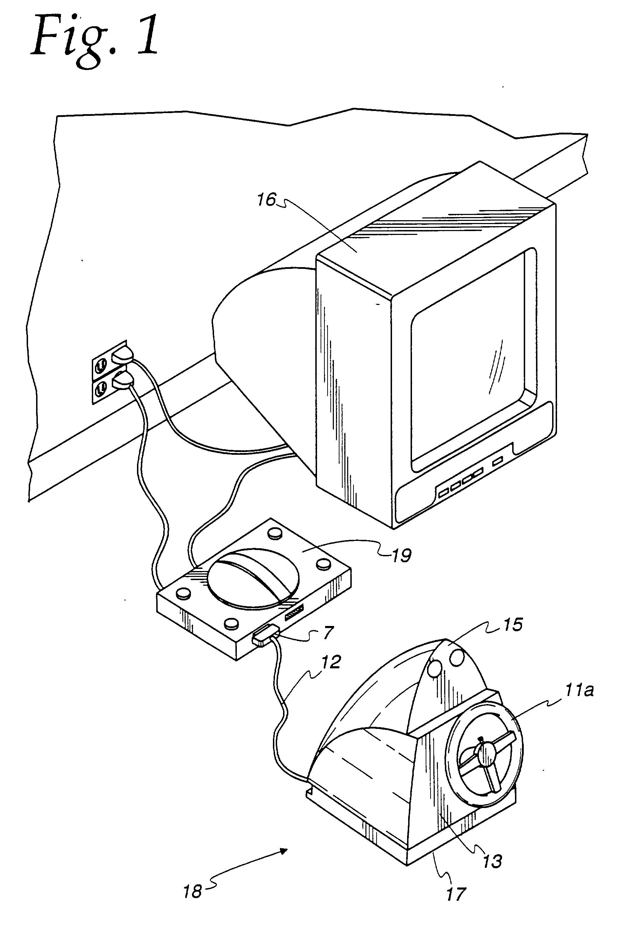

Turning now to the drawings, FIG. 1 depicts a video game control unit 18 embodying the present invention. A vehicle controller 11 (a steering wheel in this embodiment) and an aesthetic shell 15 are shown coupled to a force feedback transmitter 13 (also called a shaker control engine) used to play video games. The transmitter 13 simulates the vehicle control responses an operator of a real vehicle would feel in a given situation. Both the shell 15, designed to match the theme of the video game being played, and the vehicle controller 11 are detachable from and re-attachable to the transmitter 13 depending on the type of simulated vehicle being manipulated during play. The transmitter 13 also includes a non-slip pad 17 on the underside of its housing to stabilize the unit during play. This non-slip pad 17 is ideally suited for use on a flat smooth surface such as a desk, floor or a table. Alternatively, the unit may be stabilized by clamps, suction cups, or other attachment mechanism for attaching the unit to a support surface such as a table.

The transmitter 13 is electrically connected to a video game console 19 via a single bundle of wires 12 having a universal video game console connector 14 at one end. Rate, degree and direction of rotation information as well as vehicle control function information is conveyed from the transmitter 13 to the video game console 19 via the bundle of wires 12. This bundle of wires 12 also carries vehicle control feedback information from the video game console 19 to the transmitter 13.

The video game console 19 is of the type commonly sold by NINTENDO, SONY or SEGA ®, and is typically for home use. Video game consoles such as these are electrically connected to a standard home television 16 and are powered by a typical 110 volt AC wall outlet. The video game control unit 18 shown in FIG. 1 derives DC power from the console 19 via the cable 12.

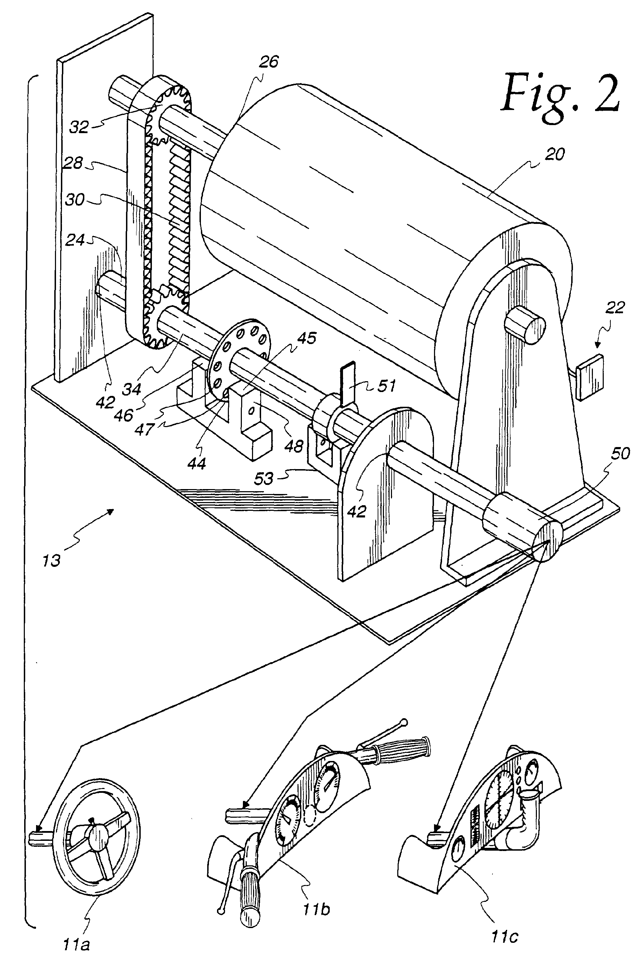

FIG. 2 is an enlarged view of the interior of the transmitter 13. A motor 20 is mounted to the housing (not shown) of the transmitter 13 and used to actuate the vehicle controller 11a, 11b, or 11c based on feedback information from the game software. Only one of the vehicle controllers 11a, 11b, or 11c is mechanically mounted to the transmitter 13 at any given time and is preferably selected according to the type of simulated vehicle to be manipulated during play of the video game. The motor 20 is driven by a typical motor driver 22 used to convert feedback commands from the video game software to a suitable motor drive voltage.

A plurality of methods may be used to transfer motion from the motor 20 to the vehicle controller 11a, 11b, or 11c. All of these methods involve coupling the motor shaft 26 to a transmitter drive shaft 24, then coupling the vehicle controller to the drive shaft 24. For example, FIG. 2 shows the motor shaft 26 coupled to the drive shaft 24 via a belt 28. The belt teeth 30 ride on a motor gear 32 mounted to the motor shaft 26, and the teeth of a corresponding drive gear 34 mounted to the drive shaft 24. When feedback information is sent by the video game software across the wires 12 (see FIG. 1) to the motor 20, causing the motor shaft 26 to turn, the transmitter drive shaft 24 turns in unison based on the gear ratio between the motor gear 32 and the drive gear 34. The vehicle controller 11a, 11b, or 11c is also coupled to the drive shaft 24. Thus, when the motor 20 actuates the drive shaft 24, the vehicle controller is also actuated, simulating a real world vehicle response.

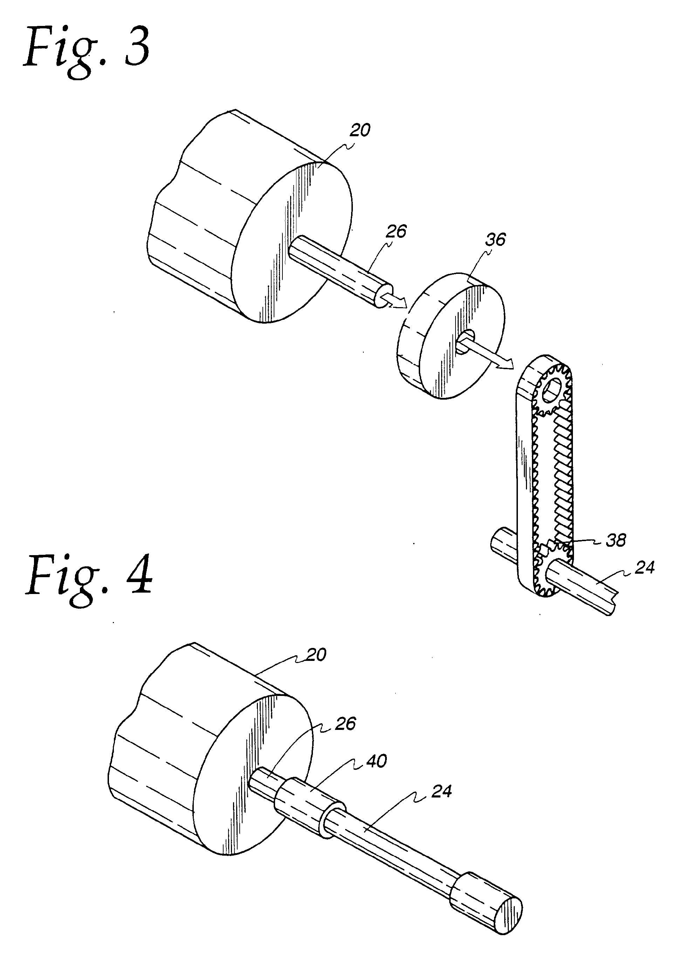

Referring to FIG. 3, another method that can be used to convey motion to the vehicle controller 11a, 11b, or 11c is by gearing the motor shaft 26 to the drive shaft 24 and using a mechanical or electro-mechanical clutch 36 to vary the torque transmitted to the drive shaft 24. By this method, illustrated in FIG. 3, the motor 20 is fixed to the transmitter housing (not shown) and the clutch 36 is geared to a slave gear 38 mounted to the drive shaft 24.

Referring to FIG. 4, a further technique for conveying motion to the vehicle controller 11a, 11b, or 11c is by directly coupling the motor shaft 26 to the drive shaft 24. In this embodiment, the motor 20 is fixed to the transmitter housing (not shown), but the drive shaft 24 is fixedly linked to the motor shaft 26 with a butt coupling 40 or other similar coupling device. To safely accept forces applied to the vehicle controller in all situations, the motor 20 used in a direct coupling application is typically much stronger and more robust than those typically used in a belt or clutch style linkage.

Referring back to FIG. 2, the drive shaft 24 is typically fixed at two points 42 within the transmitter housing (not shown) for stability. At these fixed stability points 42, the drive shaft 24 rotates freely when motion is induced by the motor 20.

One or more position sensing devices are typically used to sense the position of the drive shaft 24 and the speed at which the drive shaft is rotated. Because the vehicle controller 11a, 11b, or 11c is mounted to the drive shaft 24, this position and rotational speed information corresponds directly to the position of the vehicle controller and the speed at which it is rotated by the video game control unit user. This information is transmitted to the video game software via the wires 12 (see FIG. 1) and feedback response information is calculated based on it. This feedback response information represents the real world forces to be simulated by the video game control unit 18, and is then sent from the video game console 19 to the motor driver 22.

One of the position sensors shown in FIG. 2 is comprised of a wheel, often called an optical "chopper" or "encoder" wheel 44, and an optical detector 45 including an infra red light emitter 46 and an infra red light receiver 48. The chopper wheel 44 preferably is a multi-hole disc fixedly mounted to the drive shaft 24 or the motor shaft 26 such that the shaft 24 or 26 runs through the center of the wheel 44. The wheel 44 is mounted perpendicular to the axis of the shaft 24 or 26 and the center of the wheel 44 corresponds to an axis of rotation of the shaft 24 or 26. The wheel also includes a plurality of equally spaced, identically shaped holes 47 disposed along its circumference, with solid areas adjacent to each hole. The holes 47 break a beam of the optical detector 45 many times per revolution of the wheel 44. The holes 47 are used to define the degree of rotation from a home position and the speed at which the shaft 24 or 26 turns. The home position is defined by another sensor comprised of a home flag 51 and an optical detector 53. The home flag 51 is fixedly mounted to the same shaft as the chopper wheel 44.

Both the emitter 46 and the receiver 48 are fixedly mounted to the transmitter housing (not shown) such that they straddle the chopper wheel 44 directly opposite from one another. The emitter 46 aims an infra red beam toward the receiver 48. When the holes 47 are between the emitter 46 and the receiver 48, the receiver 48 is able to receive the optical beam. When the holes 47 are not between the emitter 46 and the receiver 48, however, the optical beam is interrupted. The rate of rotation of the shaft is determined by the timing between interruptions of the optical beam, while the degree of rotation is determined by the number of beam interruptions.

The optical detectors 45 and 53 send rate of rotation, degree of rotation and direction of rotation information to the video game software via the wires 12. Because the vehicle controller 11a, 11b, or 11c is fixedly mounted to the drive shaft 24, the rate, degree and direction of rotation information measured directly corresponds to the speed at which the vehicle controller 11 is being rotated by the user as well as its angular position.

The drive shaft 24 extends past the transmitter housing and forms a drive shaft hub 50 suited for mounting one of the vehicle controllers 11a, 11b, or 11c. This hub 50 is capable of coupling with any of a plurality of different vehicle controllers. As shown in FIG. 2, examples of these vehicle controllers include a steering wheel 11a, motorcycle handle bars 11b and a single handed aircraft joystick 11c.

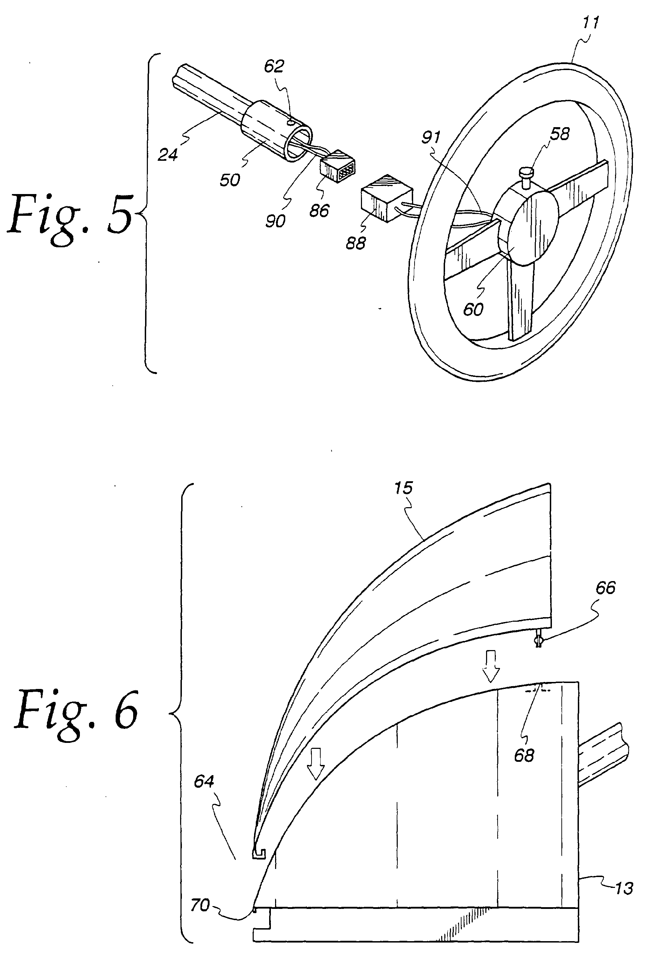

This mechanical coupling can be accomplished in a variety of ways, the most simple being the method shown in FIG. 5. In this embodiment, a spring loaded pin 58 is included in a keyed vehicle controller hub 60. To couple the vehicle controller 11 to the drive shaft 24, the keyed vehicle controller hub 60 is inserted over the mated drive shaft hub 50 and slid in the direction of the drive shaft axis until the pin 58 snaps into the drive shaft hub hole 62 thereby fixing the position of the vehicle controller 11 on the drive shaft 24.

The aesthetic shell 15 of the present invention can also be coupled with the transmitter 13 in several different ways. For example, as shown in FIG. 6, the shell 15 may be fitted with flexible feet 64 and molded plastic retention pins 66 that fit into corresponding inlets. To attach the shell 15, the pins 66 are snapped into their corresponding transmitter housing inlets 68. The shell 15 is then rotated downward until the feet 64 snap into place over a transmitter lip 70.

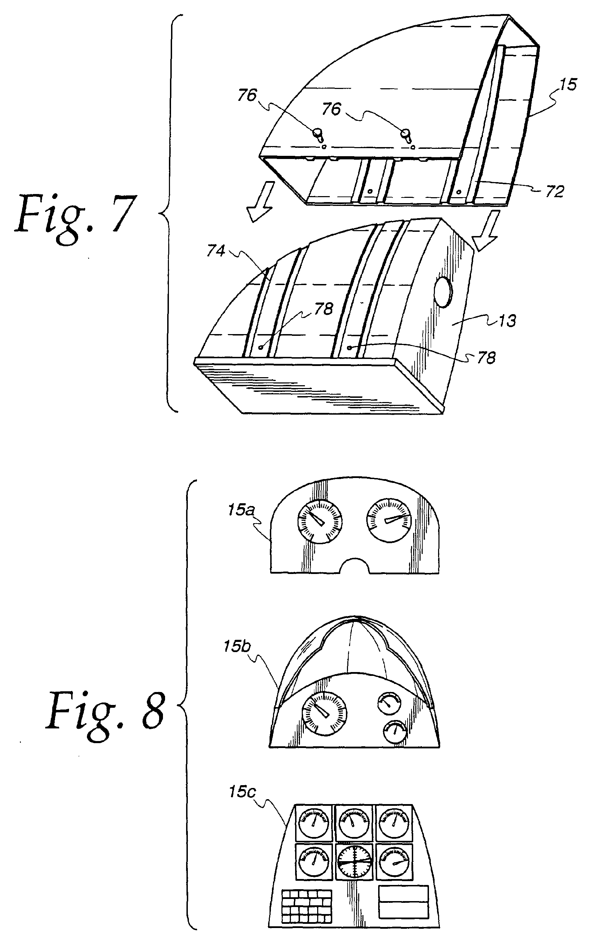

Another technique for connecting the shell 15 to the transmitter 13 is shown in FIG. 7 wherein the shell housing inner surface 72 is keyed to the transmitter housing 74. The shell 15 is attached to the transmitter 13 by aligning the mated surfaces and sliding the shell 15 vertically over the transmitter housing 74 in the vertical direction. The shell 15 also includes one or more spring loaded pull pins 76. The pins insert into corresponding holes 78 in the transmitter housing 74, and lock the shell 15 in place once it is in its proper position over the transmitter 13.

Some of the different types of aesthetic shells are shown in FIG. 8. As previously discussed, the type of shell used depends on the theme of the game being played. Several examples of such shells include a race car shell 15a, a motorcycle shell 15b and a submarine shell 15c. Since the shells are purely aesthetic, there is no electrical connection formed between the shell 15 and the transmitter 13.

On the other hand, to transmit force feedback and vehicle control function information between the video game and the user, an electrical connection is established between the vehicle controller 11 and the transmitter 13. This can be accomplished in a variety of different ways. For example, as shown in FIG. 5, universal female 86 and male 88 electrical connectors can be coupled before the vehicle controller 11 is mounted to the transmitter 13, and then tucked into the drive shaft hub 50 such that the two hubs 50 and 60 can then be mechanically coupled.

FIG. 5 illustrates this method of connection wherein universal female 86 and male 88 connectors are housed in the vehicle controller hub 60 and drive shaft hub 50 respectively. As previously discussed, the mating surfaces of the respective hubs 50 and 60 are keyed to simplify the installation and detachment of different vehicle controllers. The connectors 86 and 88 are free-standing within their respective hubs 50 and 60 and are attached to the ends of respective bundles of wires 90 and 91. The number of wires in the bundles 90 and 91 is sufficient to accommodate vehicle control function information from any of a plurality of different vehicle controllers, such as those shown in FIG. 2.

Each different vehicle controller may have different buttons or other controls based on the application for which it was designed, and may provide different function information as a result. Because of the different numbers and types of functions performed by the different vehicle controllers, each controller may use some but not all of the wires available in the bundle 90. The number of wires used may also depend on the video game being played. However, the number of wires in the bundle 90 is sufficient to accommodate all possible functions performed by different controllers. Even though some of the wires in the bundle 90 may be unused, the electrical connection made between the transmitter 13 and the plurality of different vehicle controllers discussed above is universal since all possible functions of the controllers can be utilized.

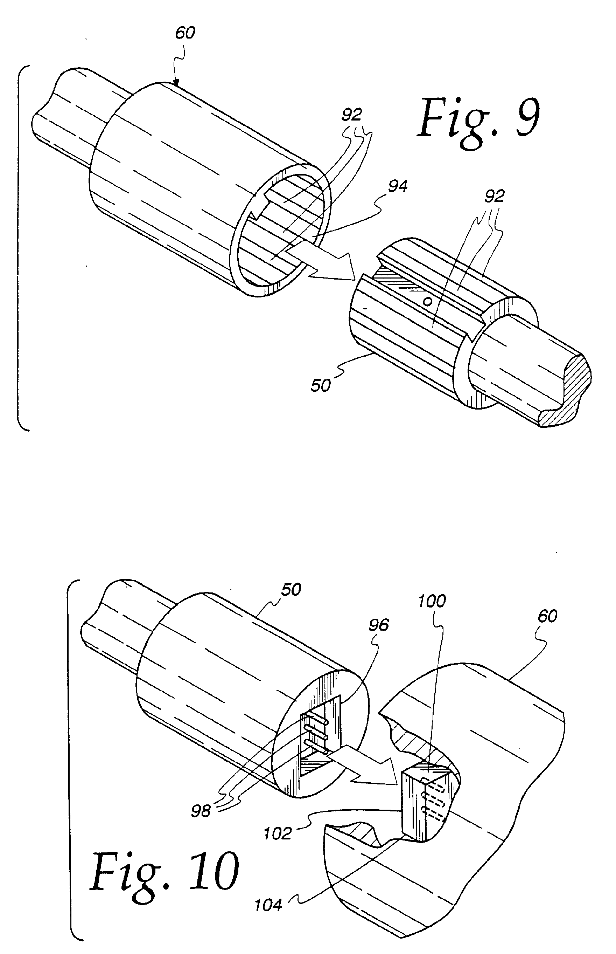

FIG. 9 shows another embodiment where the inner surface of the vehicle control hub 60 and the outer surface of the drive shaft hub 50 include strips of conductive material 92 (such as copper), separated by non-conductive material 94, for electrically connecting the two pieces. The vehicle control hub 60 is keyed to the drive shaft hub 50 and is installed by sliding the two parts together until they lock. As previously discussed, one mechanism used to lock the parts together is typically a spring loaded pin or other suitable device. The matching sets of conductive material 92 are aligned in their respective hubs 60 and 50 such that once the hubs are locked in place, an electrical connection is formed between the vehicle controller 11 and the transmitter 13. Once again, this connection is such that all possible vehicle control functions that can be performed by the different vehicle controllers capable of being mounted to the transmitter 13, can be transferred from the vehicle controller 11 to the video game console 19.

FIG. 10 shows a further method for electrically connecting the vehicle controller 11 to the drive shaft hub 50 wherein the drive shaft hub 50 includes a keyed recessed cavity 96 having a plurality of conductive pins 98. These pins 98 are mated to a corresponding set of conductive inlets 100 lined with non-conductive material 102 and housed in a vehicle control hub keyed extension 104. The two hubs 50 and 60 have a sufficient number of pins 98 and conductive inlets 100, respectively, to transmit all possible vehicle control function information from the vehicle controller 11 to the video game console 19 via the transmitter 13.

As previously mentioned, more than one method can be used to mechanically mount the vehicle controller 11 to the drive shaft 24 of the transmitter 13. The spring loaded pin 58 of FIG. 3, or an equivalent design, may be used in conjunction with any of the electrical connection designs described herein such that it is compatible with all vehicle controllers.

While the present invention has been described with reference to one or more particular embodiments, those skilled in the art will recognize that many changes may be made thereto without departing from the spirit and scope of the present invention. Each of these embodiments and obvious variations thereof is contemplated as falling within the spirit and scope of the claimed invention, which is set forth in the following claims.

## Claims

1. A video game control unit for use with a video game, comprising:
a universal force feedback transmitter for transmitting forces felt by a simulated vehicle in the video game, the transmitter receiving and interpreting data from the video game indicative of the forces; and
a plurality of different vehicle controls detachably mountable to the transmitter, one of the vehicle controls being mounted to the transmitter at a given time according to a type of the simulated vehicle in the video game, the one of the vehicle controls manipulating the simulated vehicle during play of the video game.

2. The video game control unit of claim 1, further including a shell aesthetically associated with the one of the vehicle controls and mechanically coupled to at least one of the transmitter and the one of the vehicle controls.

3. The video game control unit of claim 1, wherein the one of the vehicle controls is electrically connected to the video game by a plurality of wires, the plurality of wires being sufficient in number to enable all possible functions to be performed by each of the plurality of different vehicle controls.

4. The video game control unit of claim 1, wherein the one of the vehicle controls includes a vehicle control hub and a vehicle control hub electrical connector, and the transmitter includes a transmitter hub and a transmitter hub electrical connector, the vehicle control hub being mounted to the transmitter hub, the vehicle control hub electrical connector being mated to the transmitter hub electrical connector.

5. The video game control unit of claim 4, wherein the vehicle control hub electrical connector is free standing within the vehicle control hub, the transmitter hub electrical connector is free standing within the transmitter hub, and both connectors are free standing while electrically connected when the vehicle control hub is mounted to the transmitter hub.

6. The video game control unit of claim 4, wherein the vehicle control hub electrical connector is fixedly secured to an inner surface of the vehicle control hub, the transmitter hub electrical connector is fixedly secured to an inner surface of the transmitter hub, and both electrical connectors are mated when the vehicle control hub is mounted to the transmitter hub.

7. The video game control unit of claim 1, wherein the plurality of different video controls include handle bars for mounting to the transmitter when the simulated vehicle is a motorcycle, a steering wheel for mounting to the transmitter when the simulated vehicle is an automobile, and upright, two-hand controls for mounting to the transmitter when the simulated vehicle is a fighter plane.

8. The video game control unit of claim 1, wherein the transmitter includes a motor.

9. The video game control unit of claim 8, wherein the transmitter includes a housing, the motor being fixedly mounted within the housing, the motor including a shaft coupled directly to the one of the vehicle controls and adapted to actuate the one of the vehicle controls while the video game is being played.

10. The video game control unit of claim 8, wherein the transmitter includes a housing, the motor being fixedly mounted within the housing, the motor including a motor shaft coupled to a steering shaft, the steering shaft including a transmitter hub adapted to actuate the one of the vehicle controls while the video game is being played.

11. The video game control unit of claim 8, wherein the transmitter includes a sensor device, the sensor device sensing position and motion data of the one of the vehicle controls, the sensor device transmitting the position and motion data to the video game.

12. The video game control unit of claim 1, wherein the transmitter includes a housing having a non-skid underside to stabilize the video game control unit while the video game is being played.
